# NEUE EUROPÄISCHE PATENTSCHRIFT

(11) **EP 2 633 618 B2**
(45) Veröffentlichungstag und Bekanntmachung des Hinweises auf die Entscheidung über den Einspruch: **27.05.2020**
(45) Hinweis auf die Patenterteilung: 06.09.2017
(21) Anmeldenummer: 11788362.9
(22) Anmeldetag: 24.10.2011
(51) Int. Cl.: H02P 27/14, H02K 11/00, H02M 7/5387, H05K 1/02

(54) **ANTRIEB**
DRIVE
ENTRAÎNEMENT

(30) Priorität: 28.10.2010 DE 102010049681
(43) Veröffentlichungstag der Anmeldung: 04.09.2013
(73) Patentinhaber: SEW-EURODRIVE GmbH & Co. KG, 76646 Bruchsal (DE)
(72) Erfinder: POENICKE, Bernd, 76327 Pfinztal (DE)
(86) Internationale Anmeldenummer: PCT/EP2011/005338
(87) Internationale Veröffentlichungsnummer: WO 2012/055521

(56) Entgegenhaltungen:
- EP-A1- 1 610 095
- EP-A2- 1 017 149
- EP-A2- 1 092 981
- DE-A1-102007 036 271
- DE-A1-102008 037 737
- DE-A1-102008 037 737
- US-B1- 7 202 619

## Beschreibung

Die Erfindung betrifft einen Antrieb.

Es ist möglich, eine galvanische Trennung zwischen der Sensorelektronik eines Winkelsensors eines elektrischen Elektromotors und der Signalelektronik des den Elektromotor speisenden Umrichters vorzusehen.

Aus der DE 10 2008 037 737 A1 ist ein Elektromotor mit Winkelsensor bekannt.

Aus der DE 10 2007 036 271 A1 ist ein Drehgeber mit Überwachung des Lagerverschleißes bekannt.

Aus der EP 1 092 981 A2 ist ein Strommessverfahren bekannt.

Aus der US 7 202 619 B1 ist ein drehzahlregelbarer Pumpenantrieb bekannt.

Aus der EP 1 017 149 A2 ist ein nicht isoliertes System für tragbare Handwerkzeuge bekannt.

Der Erfindung liegt daher die Aufgabe zugrunde, einen Antrieb weiterzubilden, wobei eine möglichst kompakte und kostengünstige Anordnung erreicht werden soll.

Erfindungsgemäß wird die Aufgabe bei dem Antrieb nach den in Anspruch 1 angegebenen Merkmalen gelöst.

Wichtige Merkmale der Erfindung bei dem Antrieb sind, dass er einen umrichtergespeisten Elektromotor umfasst, an dem ein Sensor zur Erfassung der Winkellage einer Welle, insbesondere einer Rotorwelle, des Elektromotors angeordnet ist,
wobei der Umrichter Signalelektronik, insbesondere umfassend einen Regler, und Leistungselektronik, insbesondere umfassend einen den Motor speisenden Wechselrichter, aufweist,
dadurch wobei die Sensorsignale der Signalelektronik zugeleitet werden, insbesondere direkt, also ohne galvanische Trennung.

Von Vorteil ist dabei, dass Bauteile zur galvanischen Trennung verzichtbar sind und somit eine möglichst kompakte und kostengünstige Bauart erreicht ist.

Bei einer vorteilhaften Ausgestaltung ist der Sensor mit der Signalelektronik galvanisch verbunden. Von Vorteil ist dabei, dass die Signale direkt auf gleichem Potential übermittelbar sind. Hierbei umfasst der Sensor eine Sensorelektronik, also eine mit elektronischen Bauteilen bestückte Leiterplatte, die Signale der von der Sensorelektronik umfassten Hall-Sensoren und Wigand-Sensoren verarbeitet.

Bei einer vorteilhaften Ausgestaltung ist an der Welle eine Maßverkörperung angeordnet, insbesondere an einem axialen Endbereich der Welle eine Maßverkörperung angeordnet. Von Vorteil ist dabei, dass ein Winkelerfassungssystem in den Elektromotor integriert ausführbar ist. Denn die Welle ist vorzugsweise Rotorwelle des Elektromotors und die Maßverkörperung ist somit im Inneren des Elektromotors angeordnet.

Bei einer vorteilhaften Ausgestaltung steht der Sensor in Wirkverbindung mit der Maßverkörperung, insbesondere detektiert die Maßverkörperung, insbesondere zur Erfassung der Winkellage. Von Vorteil ist dabei, dass ein besonders einfach aufgebauter Sensor verwendbar ist, der keine eigenen Lager oder dergleichen benötigt. Somit sind auch von zusätzlichen Lagern verursachte Verluste vermeidbar.

Bei einer vorteilhaften Ausgestaltung ist ein Isoliermittel, insbesondere zur elektrischen Isolierung, zwischen der Maßverkörperung und dem Sensor angeordnet. Von Vorteil ist dabei, dass eine kompakte Anordnung erreichbar ist. Denn die magnetischen Felder durchdringen das Isoliermittel im Wesentlichen ungestört, wobei die elektrische Isolierung aber verbessert ist.

Bei einer vorteilhaften Ausgestaltung ist der Abstand zwischen Maßverkörperung und Sensor derart klein und die Isolierfestigkeit und/oder Durchschlagfestigkeit des Isoliermittels derart hoch, dass bei Entfernen des elektrischen Isoliermittels ein elektrischer Durchschlag stattfindet oder zumindest sehr wahrscheinlich ist, insbesondere zumindest bei ungünstigen Witterungsbedingungen oder Umgebungsbedingungen. Von Vorteil ist dabei, dass eine kompaktere Anordnung als bei bloßer Verwendung von Luft ausführbar ist. Insbesondere der Abstand zwischen Maßverkörperung und Leiterplatte mit Bauteilen, wie Hall-Sensor und/oder Wiegandsensor, ist gering haltbar.

Bei einer vorteilhaften Ausgestaltung ist das Isoliermittel auf oder in Vergussmasse und/oder auf oder in Klebstoff angeordnet, wobei die Vergussmasse beziehungsweise der Klebstoff auch verbunden ist mit einer Leiterplatte des Sensors und/oder mit auf der Leiterplatte des Sensors bestückten Bauteilen. Von Vorteil ist dabei, dass ein stoffschlüssiges Halten des Isoliermittels bewirkbar ist und somit ein sicheres Halten gewährleistet ist. Außerdem ist die Vergussmasse und/oder der Klebstoff selbst aus isolierfestem Material ausführbar, so dass eine hohe Isolierfestigkeit erreichbar ist.

Bei einer vorteilhaften Ausgestaltung ist das Isoliermittel aus einem Material gefertigt, das eine höhere elektrische Isolierfestigkeit als Luft aufweist, insbesondere eine mindestens fünfmal höhere. Von Vorteil ist dabei, dass ein geringer Abstand zwischen Maßverkörperung und Leiterplatte erreichbar ist.

Bei einer vorteilhaften Ausgestaltung ist das Isoliermittel als starre Platte ausgeführt. Von Vorteil ist dabei, dass eine einfache Montage mit Klebstoff oder Vergussmasse ausführbar ist.

Bei einer vorteilhaften Ausgestaltung ist das Isoliermittel als flexible Folie, insbesondere selbstklebende Folie, ausgeführt und deckt die mit Bauteilen bestückte Leiterplatte an ihrer der Maßverkörperung zugewandten Seite zumindest teilweise ab. Von Vorteil ist dabei, dass die Folie ihre Form der Oberfläche der mit Bauteilen bestückten Leiterplatte anpasst.

Bei einer vorteilhaften Ausgestaltung ist das Isoliermittel als vorgeformte Folie, insbesondere selbstklebende Folie, ausgeführt und deckt die mit Bauteilen bestückte Leiterplatte an ihrer der Maßverkörperung zugewandten Seite zumindest teilweise ab. Von Vorteil ist dabei, dass eine einfache schnelle Positionierung bei der Montage erreichbar ist.

Bei einer vorteilhaften Ausgestaltung ist das Isoliermittel zwischen Maßverkörperung und zumindest einem Teilbereich des Klebstoffes beziehungsweise der Vergussmasse angeordnet. Von Vorteil ist dabei, dass ein Vergießen des Isoliermittels oder ein Anordnen an der Oberfläche des Klebstoffes oder der Vergussmasse ermöglicht ist.

Bei einer vorteilhaften Ausgestaltung ist die Maßverkörperung ein Dauermagnet, insbesondere ein in radialer Richtung magnetisierter Dauermagnet. Von Vorteil ist dabei, dass eine einfache Montage ermöglicht ist.

Bei einer vorteilhaften Ausgestaltung umfasst der Sensor zumindest einen Hall-Sensor und/oder einen Wiegand-Sensor, insbesondere wobei der Sensor auch einen Auswerteschaltung zur Erzeugung der Sensorsignale aus den Ausgangssignalen des Wiegand-Sensors und/oder Hall-Sensors umfasst. Von Vorteil ist dabei, dass eine Erfassung der Winkellage einerseits und eine Erfassung der Anzahl der zurückgelegten Gesamtumdrehungen ausführbar ist.

Bei einer vorteilhaften Ausgestaltung ist ein Gleichrichter des Umrichters aus einer Netz-Wechselspannung versorgt und die Signalelektronik ist galvanisch verbunden mit einem Ausgang des Gleichrichters und/oder die Signalelektronik ist galvanisch verbunden mit einem Potential einen Wechselrichter des Umrichters versorgenden unipolaren Spannung und/oder Gleichspannung, insbesondere Zwischenkreisspannung. Von Vorteil ist dabei, dass keine Bauteile zur galvanischen Trennung erforderlich sind.

Bei einer vorteilhaften Ausgestaltung erzeugt die Signalelektronik pulsweitenmodulierte Ansteuersignale für Halbleiterschalter des Wechselrichters, wobei die Sensorsignale berücksichtigt werden und/oder der Sensorsignalverlauf berücksichtigt wird. Von Vorteil ist dabei, dass eine besonders zeitaktuelle und genaue Erzeugung der pulsweitemodulierten Ansteuersignale ausführbar ist, da die galvanische Trennung und somit eine damit verbundene Zeitverzögerung entfällt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Antrieb schematisch skizziert.

In der Figur 2 ist ein erfindungsgemäßer Antrieb schematisch skizziert.

In der Figur 3 ist die erfindungsgemäße Sensoranordnung näher skizziert.

In den Figuren 4 bis 8 sind alternative Ausführungsbeispiele der Sensoranordnung gezeigt.

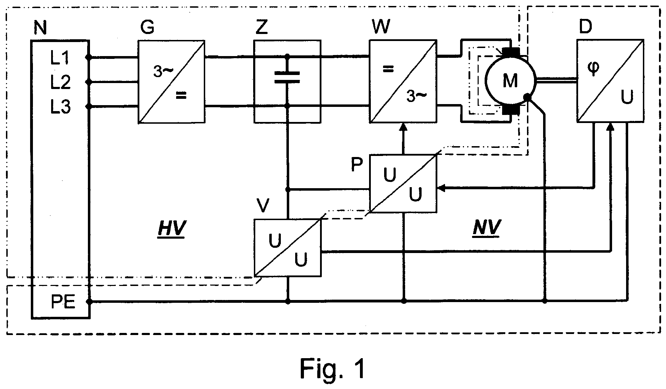

In der Figur 1 ist ein Antrieb dargestellt, der einen umrichtergespeisten Elektromotor M umfasst, wobei am Rotor des Motors M ein Drehwinkelsensor D vorgesehen ist. Aus dem Wechselstromnetz, also mittels der Netzversorgung N, wird ein Gleichrichter G, insbesondere Dreiphasengleichrichter, versorgt, dessen ausgangsseitige unipolare Spannung mittels eines Zwischenkreiskondensators Z geglättet wird, an welchem die Zwischenkreisspannung U_z anliegt, welche eine Hochvoltspannung von beispielsweise bis zu 800 Volt ist.

Der Drehwinkelsensor D befindet sich im Niedervoltbereich des Antriebs und ist auf Massepotential gelegt. Die Stromversorgung V für die im Drehwinkelsensor D angeordnete elektronische Schaltung trennt die Signalelektronik und den Drehwinkelsensor D samt seiner elektronischen Schaltung von der Hochvoltspannung. Vorzugsweise wird also der Drehwinkelsensor aus der Sekundärwicklung eines Transformators versorgt, dessen Primärwicklung galvanisch mit dem Zwischenkreis verbunden ist, insbesondere mit einem der Zwischenkreispotentiale. Die Signalübertragung vom Drehwinkelsensor D zur Signalelektronik erfolgt ohne galvanische Trennung. Die Signalübertragung der Ansteuersignale für die Schalter des Wechselrichters werden von der Signalelektronik zu den Schaltern des Wechselrichters über den Signalpegelwandler P mit galvanischer Trennung geführt.

Der den Motor speisende Wechselrichter W wird aus dem Zwischenkreis versorgt. Er wird derart mit für seine Halbleiterschalter bestimmten pulsweitenmodulierten Ansteuersignalen von der Signalelektronik angesteuert, dass dem Motor ein Drehspannungssystem zur Verfügung gestellt wird.

Die Signalelektronik umfasst einen Regler, dem die erfassten Drehwinkelwerte sowie ein erfasster Motorstrom zugeführt werden. Ausgangsseitig stellt der Regler Werte für Ausgangsspannung bereit, so dass die pulsweitenmodulierten Ansteuersignale entsprechend erzeugbar sind, insbesondere unter Berücksichtigung der aktuell vorhandenen Zwischenkreisspannung.

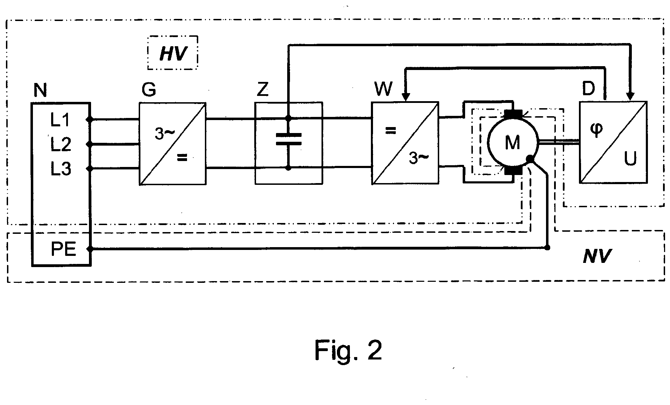

In der Figur 2 entfällt im Unterschied zur Figur 1 die galvanische Trennung des Zwischenkreise und der Signalelektronik. Es werden die elektronischen Bauteile des Drehwinkelsensors D auf dem gleichen Potential betrieben wie die Signalelektronik des Umrichters, also im Hochspannungsbereich HV. Da der Elektromotor mit seinem Gehäuse sowie auch das Gehäuse des Drehwinkelsensors D mit Masse beziehungsweise Nullspannungspotential PE verbunden sind, ist zwischen dem hierzu zugehörigen Niederspannungsbereich NV und dem Hochspannungsbereich HV der Signalelektronik und Elektronik des Drehwinkelsensors D eine geeignete elektrische Isolierung vorzusehen. Dabei sind auch große Abstände geeignet, eine ausreichende Isolierung herzustellen, wenn der Abstand derart groß ist, dass kein elektrischer Durchschlag erfolgen kann durch das zwischengeordnete Isoliermedium, wie Luft.

Diese Isolierung ist erfindungsgemäß auch im Drehwinkelsensor D vorzusehen.

Die Signalelektronik des Umrichters ist also galvanisch mit einem Anschluss des Zwischenkreiskondensators verbunden, ist also an das obere oder untere Zwischenkreispotential angebunden.

Ebenso ist auch der Sensor, insbesondere seine elektronische Schaltung zur Erzeugung der Gebersignal und die zugehörige Signalaufbereitung galvanisch mit einem Zwischenkreispotential verbunden, also mit einem Anschluss des Zwischenkreiskondensators. Sie liegt somit auf einem Hochvoltpotential gegenüber dem PE oder Nullleiterpotential. Zwischen der elektronischen Schaltung des Sensors, also Drehwinkelgebers, und der Signalelektronik des Umrichters besteht keine galvanische Trennung sondern es ist sogar eine galvanische Verbindung vorhanden, insbesondere eines elektrischen Anschlusses des Sensors mit einem metallischen Beriech der Leiterplatte der Signalelektronik des Umrichters.

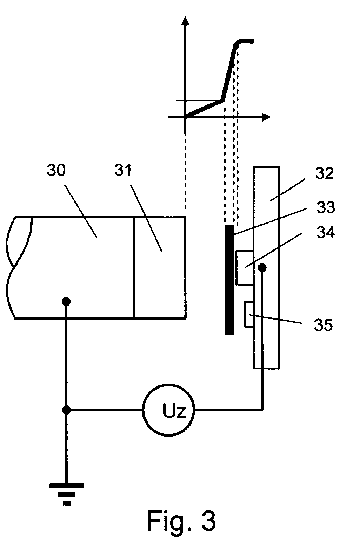

Figur 3 zeigt einen schematischen Schnitt hierzu. Dabei ist eine Welle 30 des Motors, insbesondere metallisch ausgeführte Rotorwelle, über ihre Lagerung mit Masse verbunden und trägt an ihrem axialen Endbereich eine Maßverkörperung 31. Diese Maßverkörperung ist vorzugsweise als in radialer Richtung magnetisierter Dauermagnet ausgeführt. Stationär gegenüber, insbesondere am Flanschteil oder Gehäuseteil des Motors ist eine Leiterplatte 32 angeordnet, auf der Sensoren (34, 35) vorgesehen sind. Hierbei ist einerseits zumindest ein Sensor 34, insbesondere Wiegand-Sensor, und andererseits zumindest ein Sensor 35, insbesondere Hall-Sensor, vorgesehen.

Somit ist eine Erfassung der Winkellage der Welle 30 und der Anzahl der Gesamtumdrehungen ausführbar. Vorzugsweise wird zur Erfassung der Winkellage ein zur Achse der Welle mittig angeordneter Kreuz-Hall-Sensor verwendet. Zur Erfassung der Anzahl der Umdrehungen sind ein oder mehrere Impulsdrahtsensoren, also Wiegand-Sensoren, verwendbar, so dass sogar eine Zählelektronik versorgbar ist aus den Energiemengen der Pulse der Impulsdrahtsensoren.

Zwischen der Leiterplatte 32 samt der auf ihr bestückten Bauteile und der Welle 30 samt der Maßverkörperung 31 ist ein Isoliermittel 33 angeordnet, so dass auch bei geringem Abstand kein elektrischer Durchschlag erfolgt.

Der Abstand ist dabei derart klein, dass bei Weglassen des Isoliermittels 33 ein elektrischer Durchschlag erfolgt, da die Potentialdifferenz zwischen dem Hochspannungsbereich und dem Niederspannungsbereich entsprechend groß ist.

Dies ist in der Figur mit der symbolischen Spannungsquelle U_z angedeutet, die Zwischenkreisspannung aufweist.

Der schematische Verlauf des Luftspaltpotentials ist ebenfalls angedeutet und zeigt die im Vergleich zur Luft größere Isolierfestigkeit des Isoliermittels 33

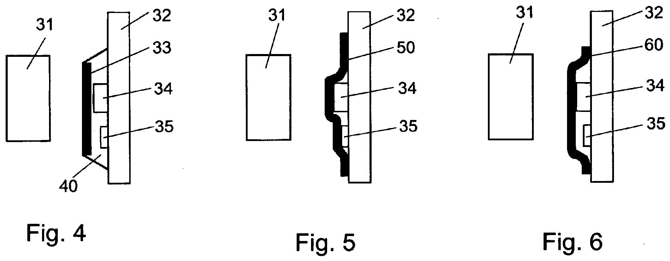

In Figur 4 ist gezeigt, wie das Isoliermittel als plattenförmig ausgeführt ist und auf einem Kleberbett vorgesehen ist. Der Kleber 40 ist hierbei zwischen der Leiterplatte 32 und dem Isoliermittel 33 angeordnet. Dabei wirkt der Kleber auch als Vergussmasse, so dass eine erhöhte Festigkeit für die gesamte Anordnung beziehungsweise die auf der Leiterplatte bestückten Bauteile, insbesondere Sensoren (34, 35) erreichbar ist. Das Isoliermittel 33 ist als starre Platte ausgeführt.

In Figur 5 ist ein weiteres Ausführungsbeispiel gezeigt, bei dem im Unterschied zur Figur 4 das Isoliermittel als flexibles Isolierplättchen 50 ausgeführt ist, das sich auf die Oberfläche des Klebers 40 legt und dieser teilweise folgt.

In Figur 6 ist im Unterschied zur Figur 4 das Isoliermittel als vorgeformte Folie ausgeführt, die wiederum angeklebt ist an die Leiterplatte 32 oder formschlüssig mit dieser verbunden ist. Bei Verwendung von Kleber 40 ist dieser wiederum zwischen der Leiterplatte 32 und der vorgeformten Folie angeordnet.

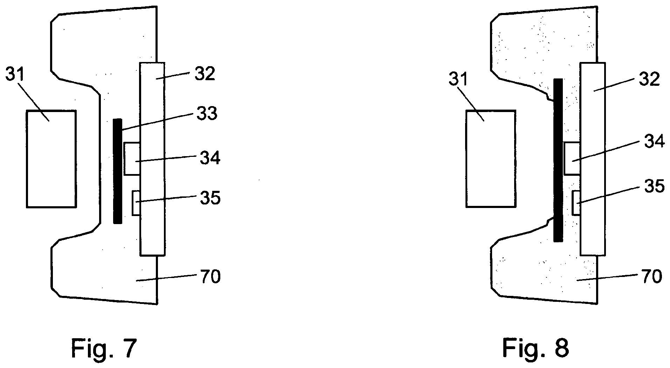

In Figur 7 ist im Unterschied zur Figur 4 das Isoliermittel zwar wiederum plattenförmig, insbesondere als starre Platte, ausgeführt, jedoch ist Vergussmasse 70 derart an der Leiterplatte vorgesehen, dass das Isoliermittel 33 innerhalb der Vergussmasse sich befindet, also vergossen ist. Auf diese Weise ist es ermöglicht, den Endbereich der Welle 30 samt Maßverkörperung 31 nicht nur in zentral axialer Richtung sondern auch seitlich mit Vergussmasse zu umgeben und eine weiter verbesserte Isolierung zu bewirken, insbesondere auch gegen metallische stationäre Komponenten im Umfeld des Endbereichs.

In Figur 8 ist im Unterschied zur Figur 7 das Isoliermittel an der Oberfläche der Vergussmasse 70 angeordnet, so dass das Isoliermittel nur teilvergossen ist, insbesondere an seiner der Leiterplatte 32 zugewandten Seite.

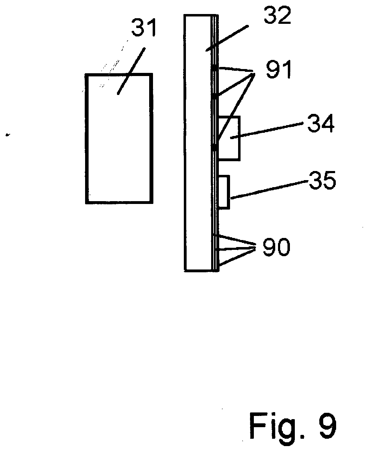

In Figur 9 ist eine alternative erfindungsgemäße Ausführungsform gezeigt, bei der die Bauteile (34, 35) der elektronischen Schaltung des Sensors auf derjenigen Seite der Leiterplatte 32 angeordnet sind, die von der Maßverkörperung 31 abgewandt ist.

Die verwendeten Durchkontaktierungen zwischen den metallischen Lagen 90 der Multilayer-Leiterplatte 32 sind nicht durch die gesamte Leiterplatte 32 hindurch kontaktiert, also nur als blind via 91 ausgeführt und vermitteln somit nur zwischen den elektrisch zu verbindenden Bereichen einen jeweiligen elektrischen Kontakt.

Somit wird das Grundmaterial der Leiterplatte als Isoliermittel zwischen Maßverkörperung 31 und elektronischen Leiterbahnen sowie Bauteilen der elektronischen Schaltung der Leiterplatte 32 verwendet.

Zur mechanischen Stabilisierung weist die Leiterplatte 32 auf der der Maßverkörperung zugewandten Seite metallische Bereiche auf, insbesondere wobei die Bereiche ein regelmäßiges Gitter bilden.

Die Leiterplatte 32 darf in weiteren Ausführungsbeispielen einlagig statt mehrlagig ausgebildet sein.

Alternativ oder zusätzlich ist ein Isoliermittel als Kappe um das Rotorwellenende mit der Maßverkörperung aufgesetzt.

### Bezugszeichenliste

N Netzversorgung
Z Zwischenkreiskondensator
M Drehstrommotor
V Stromversorgungsmodul
HV Hochspannungsteil
G Gleichrichter, insbesondere Dreiphasengleichrichter
W Wechselrichter, insbesondere Dreiphasenwechselrichter
D Drehwinkelsensor
P Signalpegelwandler mit galvanischer Trennung
NV Niederspannungsteil
U_z Zwischenkreisspannung

30 Welle
31 Maßverkörperung, beispielsweise Dauermagnet
32 Leiterplatte
33 Isoliermittel
34 Sensor, insbesondere Wiegand-Sensor
35 Sensor, insbesondere Hall-Sensor
40 Kleber
50 flexibles Isolierplättchen
60 flexible Folie, insbesondere vorgeformte Folie
70 Vergussmasse
90 metallische Bereiche, Lagen
91 blind via, nicht durch die gesamte Leiterplatte (32) hindurchgehende Durchkontaktierung

## Patentansprüche

1. Antrieb, umfassend einen umrichtergespeisten Elektromotor, an dem ein Sensor (35), insbesondere Drehwinkelgeber, zur Erfassung der Winkellage einer Welle (30), insbesondere einer Rotorwelle, des Elektromotors angeordnet ist,
wobei der Umrichter Signalelektronik, insbesondere umfassend einen Regler, und Leistungselektronik, umfassend einen den Motor speisenden Wechselrichter, aufweist,
wobei der Wechselrichter aus einer Zwischenkreisspannung gespeist wird, insbesondere die mehr als 50 Volt oder mehr als 100 Volt beträgt,
wobei die Zwischenkreisspannung einen Zwischenkreiskondensator oder eine entsprechende Zwischenkreiskapazität speist, insbesondere von ihm beziehungsweise ihr geglättet wird,
wobei der Sensor (35) eine elektronische Schaltung zur Erzeugung von Gebersignalen mit zugehöriger Signalaufbereitung umfasst,
**dadurch gekennzeichnet, dass**
die elektronische Schaltung des Sensors (35) galvanisch verbunden ist mit einem Zwischenkreispotential der Zwischenkreisspannung, insbesondere also mit einem der Anschlüsse des Zwischenkreiskondensators oder einer entsprechenden Zwischenkreiskapazität,
wobei an einem axialen Endbereich der Welle (30) eine Maßverkörperung (31) angeordnet ist,
wobei als Isoliermittel (33) zur elektrischen Isolierung zwischen Maßverkörperung (31) und Sensor (35) eine von der elektronischen Schaltung des Sensors (35) umfasste Leiterplatte (32) verwendet ist,
wobei die Bauelemente (34, 35) der elektronischen Schaltung auf der von der Maßverkörperung (31) abgewandten Seite der Leiterplatte (32) angeordnet sind.

2. Antrieb nach Anspruch 1,
**dadurch gekennzeichnet, dass**
der Sensor (35) mit der Signalelektronik galvanisch verbunden ist
und/oder dass
die Sensorsignale der Signalelektronik zugeleitet werden, also direkt, also ohne galvanische Trennung.

3. Antrieb nach mindestens einem der vorangegangenen Ansprüche,
**dadurch gekennzeichnet, dass**
der Sensor (35) in Wirkverbindung mit der Maßverkörperung (31) steht, insbesondere die Maßverkörperung (31) detektiert, insbesondere zur Erfassung der Winkellage.

4. Antrieb nach mindestens einem der vorangegangenen Ansprüche,
**dadurch gekennzeichnet, dass**
die Durchschlagfestigkeit des Materials des Isoliermittels (33) größer als 3kV/mm und/oder als die Durchschlagfestigkeit von Luft ist, insbesondere von trockener Umgebungsluft bei - 10°C und einem Druck von 1 bar.

5. Antrieb nach mindestens einem der vorangegangenen Ansprüche,
**dadurch gekennzeichnet, dass**
die Leiterplatte (32) keine durch die gesamte Leiterplatte (32) durchgehenden Durchkontaktierungen aufweist, insbesondere wobei also die Leiterplatte (32) nur blind vias (91) als Durchkontaktierungen aufweist,
und/oder dass die Normalenrichtung der Leiterplatte (32) in Wellenachsrichtung orientiert ist,
und/oder dass die Leiterplatte (32) einlagig oder mehrlagig ausgebildet ist, wobei die Lagen in einem elektrisch isolierenden Grundmaterial vorgesehen sind.

6. Antrieb nach mindestens einem der vorangegangenen Ansprüche,
**dadurch gekennzeichnet, dass**
die Leiterplatte (32) auf der der Maßverkörperung (31) zugewandten Seite metallische Bereiche (90) aufweist, insbesondere wobei die Bereiche (90) ein regelmäßiges Gitter bilden.

7. Antrieb nach mindestens einem der vorangegangenen Ansprüche,
**dadurch gekennzeichnet, dass**
ein Isoliermittel (33), insbesondere zur elektrischen Isolierung, mit der Maßverkörperung (31) drehfest verbunden ist, insbesondere wobei das Isoliermittel (33) mit der Maßverkörperung (31) stoffschlüssig, kraftschlüssig und/oder formschlüssig verbunden ist,
insbesondere wobei das Isoliermittel (33) kappenförmig ausgebildet ist und/oder mit der Maßverkörperung (31) aufgeklipst verbunden ist
und/der wobei das Isoliermittel (33) axial derart ausgedehnt ist, dass es den von der Maßverkörperung (31) überdeckten axialen Bereich zumindest teilweise axial überdeckt,
insbesondere wobei die Wellenachse die axiale Richtung definiert.

8. Antrieb nach mindestens einem der vorangegangenen Ansprüche,
**dadurch gekennzeichnet, dass**
der Abstand zwischen Maßverkörperung (31) und Sensor (35) derart klein und die Isolierfestigkeit und/oder Durchschlagfestigkeit des Isoliermittels (33) derart hoch ist, dass bei Entfernen des elektrischen Isoliermittels (33) ein elektrischer Durchschlag stattfindet oder zumindest sehr wahrscheinlich ist.

9. Antrieb nach mindestens einem der vorangegangenen Ansprüche,
**dadurch gekennzeichnet, dass**
ein zusätzliches Isoliermittel auf oder in Vergussmasse (70) und/oder auf oder in Klebstoff angeordnet ist, wobei die Vergussmasse (70) beziehungsweise der Klebstoff auch verbunden ist mit einer Leiterplatte (32) des Sensors (35) und/oder mit auf der Leiterplatte (32) des Sensors (35) bestückten Bauteilen,
insbesondere wobei das Isoliermittel (33) aus einem Material gefertigt ist, das eine höhere elektrische Isolierfestigkeit als Luft aufweist, insbesondere eine mindestens fünfmal höhere, und/oder dass
ein zusätzliches Isoliermittel als starre Platte ausgeführt ist
und/oder dass
ein zusätzliches Isoliermittel als flexible Folie (60), insbesondere selbstklebende Folie (60), ausgeführt ist und die mit Bauteilen bestückte Leiterplatte (32) an ihrer der Maßverkörperung (31) zugewandten Seite zumindest teilweise abdeckt,
und/oder dass
ein zusätzliches Isoliermittel als vorgeformte Folie (60), insbesondere selbstklebende Folie (60), ausgeführt ist und die mit Bauteilen bestückte Leiterplatte (32) an ihrer der Maßverkörperung (31) zugewandten Seite zumindest teilweise abdeckt,
und/oder dass
ein zusätzliches Isoliermittel zwischen Maßverkörperung (31) und zumindest einem Teilbereich des Klebstoffes beziehungsweise der Vergussmasse (70) angeordnet ist.

10. Antrieb nach mindestens einem der vorangegangenen Ansprüche,
**dadurch gekennzeichnet, dass**
die Maßverkörperung (31) ein Dauermagnet ist, insbesondere ein in radialer Richtung magnetisierter Dauermagnet.

11. Antrieb nach mindestens einem der vorangegangenen Ansprüche,
**dadurch gekennzeichnet, dass**
der Sensor (35) zumindest einen Hall-Sensor (35) und/oder einen Wiegand-Sensor umfasst, insbesondere wobei der Sensor (35) auch eine Auswerteschaltung zur Erzeugung der Sensorsignale aus den Ausgangssignalen des Wiegand-Sensors und/oder Hall-Sensors (35) umfasst.

12. Antrieb nach mindestens einem der vorangegangenen Ansprüche,
**dadurch gekennzeichnet, dass**
ein Gleichrichter des Umrichters aus einer Netz-Wechselspannung versorgt ist und die Signalelektronik galvanisch verbunden ist mit einem Ausgang des Gleichrichters und/oder die Signalelektronik galvanisch verbunden ist mit einem Potential einen Wechselrichter des Umrichters versorgenden unipolaren Spannung und/oder Gleichspannung, insbesondere Zwischenkreisspannung.

13. Antrieb nach mindestens einem der vorangegangenen Ansprüche,
**dadurch gekennzeichnet, dass**
die Signalelektronik pulsweitenmodulierte Ansteuersignale für Halbleiteirschalter des Wechselrichters erzeugt, wobei die Sensorsignale berücksichtigt werden und/oder der Sensorsignalverlauf berücksichtigt wird.

## Claims

1. Drive, comprising a converter-fed electric motor on which is arranged a sensor (35), in particular an angle-of-rotation transducer, for detecting the angular position of a shaft (30), in particular of a rotor shaft, of the electric motor,
wherein the converter has signal electronics, in particular comprising a controller, and power electronics, comprising an inverter feeding the motor,
wherein the inverter is fed from an intermediate circuit voltage, in particular which is more than 50 volts or more than 100 volts,
wherein the intermediate circuit voltage feeds an intermediate circuit capacitor or a corresponding intermediate circuit capacitance, in particular is smoothed by the capacitor or capacitance,
wherein the sensor (35) comprises an electronic circuit for generating transducer signals with associated signal processing,
**characterised in that**
the electronic circuit of the sensor (35) is electrically connected to an intermediate circuit potential of the intermediate circuit voltage, in particular therefore to one of the terminals of the intermediate circuit capacitor or a corresponding intermediate circuit capacitance,
wherein a material measure (31) is arranged at an axial end region of the shaft (30),
wherein a printed circuit board (32) comprised by the electronic circuit of the sensor (35) is used as insulating means (33) for electrical insulation between the material measure (31) and the sensor (35),
wherein the components (34, 35) of the electronic circuit are arranged on the side of the printed circuit board (32) facing away from the material measure (31).

2. Drive according to Claim 1,
**characterised in that**
the sensor (35) is electrically connected to the signal electronics
and/or **in that**
the sensor signals are supplied to the signal electronics, i.e. directly, i.e. without electrical isolation.

3. Drive according to at least one of the preceding claims,
**characterised in that**
the sensor (35) is in operative connection with the material measure (31), in particular detects the material measure (31), in particular for detecting the angular position.

4. Drive according to at least one of the preceding claims,
**characterised in that**
the dielectric strength of the material of the insulating means (33) is greater than 3kV/mm and/or than the dielectric strength of air, in particular of dry ambient air at -10°C and a pressure of 1 bar.

5. Drive according to at least one of the preceding claims,
**characterised in that**
the printed circuit board (32) has no throughplatings passing through the entire printed circuit board (32), in particular wherein, the printed circuit board (32) therefore has only blind vias (91) as throughplatings.
and/or **in that** the direction of normal to the printed circuit board (32) is oriented in the shaft axis direction,
and/or **in that** the printed circuit board (32) is formed of one layer or more than one layer, wherein the layers are provided in an electrically insulating base material.

6. Drive according to at least one of the preceding claims,
**characterised in that**
the printed circuit board (32) has metallic regions (90) on the side facing the material measure (31), in particular wherein the regions (90) form a regular grid.

7. Drive according to at least one of the preceding claims,
**characterised in that**
an insulating means (33), in particular for electrical insulation, is rotationally fixedly connected to the material measure (31), in particular wherein the insulating means (33) is connected to the material measure (31) in a material-locking, force-locking and/or form-locking manner,
in particular wherein the insulating means (33) is of cap-shaped form and/or is connected in a clipped-on manner to the material measure (31)
and/or wherein the insulating means (33) is axially extended such that it at least partially axially covers the axial region covered by the material measure (31),
in particular wherein the shaft axis defines the axial direction.

8. Drive according to at least one of the preceding claims,
**characterised in that**
the distance between the material measure (31) and the sensor (35) is so small and the insulating strength and/or dielectric strength of the insulating means (33) is so high that an electric breakdown takes place, or at least is very likely, when the electrical insulating means (33) is removed.

9. Drive according to at least one of the preceding claims,
**characterised in that**
an additional insulating means is arranged on or in sealing compound (70) and/or on or in adhesive, wherein the sealing compound (70) or the adhesive is also connected to a printed circuit board (32) of the sensor (35) and/or to components fitted on the printed circuit board (32) of the sensor (35),
in particular wherein the insulating means (33) is made of a material which has a higher electrical insulating strength than air, in particular at least five times higher,
and/or **in that**
an additional insulating means is designed as a rigid plate
and/or **in that**
an additional insulating means is designed as a flexible film (60), in particular a self-adhesive film (60), and at least partially covers the printed circuit board (32), fitted with components, at its side facing the material measure (31),
and/or **in that**
an additional insulating means is designed as a preformed film (60), in particular a self-adhesive film (60), and at least partially covers the printed circuit board (32), fitted with components, at its side facing the material measure (31),
and/or **in that**
an additional insulating means is arranged between the material measure (31) and at least one partial region of the adhesive or of the sealing compound (70).

10. Drive according to at least one of the preceding claims,
**characterised in that**
the material measure (31) is a permanent magnet, in particular a permanent magnet magnetised in the radial direction.

11. Drive according to at least one of the preceding claims,
**characterised in that**
the sensor (35) comprises at least one Hall sensor (35) and/or a Wiegand sensor, in particular wherein the sensor (35) also comprises an evaluating circuit for generating the sensor signals from the output signals of the Wiegand sensor and/or Hall sensor (35).

12. Drive according to at least one of the preceding claims,
**characterised in that**
a rectifier of the converter is supplied from a mains alternating voltage and the signal electronics are electrically connected to an output of the rectifier and/or the signal electronics are electrically connected to a potential supplying an inverter of the converter unipolar voltage and/or direct voltage, in particular intermediate circuit voltage.

13. Drive according to at least one of the preceding claims,
**characterised in that**
the signal electronics generate pulse-width-modulated control signals for semiconductor switches of the inverter, wherein the sensor signals are taken into account and/or the sensor signal profile is considered.

## Revendications

1. Entraînement, comprenant un moteur électrique alimenté par un variateur, sur lequel est disposé un capteur (35), en particulier un capteur d'angle de rotation, servant à déterminer la position angulaire d'un arbre (30), en particulier d'un arbre de rotor, du moteur électrique,
dans lequel le variateur présente une électronique de traitement de signaux, comprenant en particulier un régulateur, et une électronique de puissance comprenant un onduleur alimentant le moteur,
dans lequel l'onduleur est alimenté à partir d'une tension de circuit intermédiaire qui est en particulier supérieure à 50 volts ou supérieure à 100 volts,
dans lequel la tension de circuit intermédiaire alimente un condensateur de circuit intermédiaire ou une capacité de circuit intermédiaire correspondante, en particulier est lissée par lui ou par elle,
dans lequel le capteur (35) comprend un circuit électronique servant à générer des signaux de capteur avec traitement correspondant des signaux,
**caractérisé en ce**
**que** le circuit électronique du capteur (35) est relié galvaniquement à un potentiel de circuit intermédiaire de la tension de circuit intermédiaire, donc en particulier à une des bornes du condensateur de circuit intermédiaire ou d'une capacité de circuit intermédiaire correspondante,
une mesure matérialisée (31) étant disposée sur une zone d'extrémité axiale de l'arbre (30),
une carte de circuit imprimé (32) comprise par le circuit électronique du capteur (35) étant utilisée comme moyen d'isolement (33) pour l'isolement électrique entre la mesure matérialisée (31) et le capteur (35),
les composants (34, 35) du circuit électronique étant disposés du côté de la carte de circuit imprimé (32) opposé à la mesure matérialisée (31).

2. Entraînement selon au moins la revendication 1,
**caractérisé en ce**
**que** le capteur (35) est relié galvaniquement à l'électronique de traitement de signaux et/ou que
les signaux de capteur sont amenés à l'électronique de traitement de signaux directement, donc sans séparation galvanique.

3. Entraînement selon au moins l'une des revendications précédentes,
**caractérisé en ce**
**que** le capteur (35) est en liaison fonctionnelle avec la mesure matérialisée (31), en particulier détecte la mesure matérialisée (31), en particulier pour déterminer la position angulaire.

4. Entraînement selon au moins l'une des revendications précédentes,
**caractérisé en ce**
**que** la rigidité diélectrique du matériau du moyen d'isolement (33) est supérieure à 3 kV/mm et/ou à la rigidité diélectrique de l'air, en particulier de l'air ambiant sec à - 10 °C et à une pression de 1 bar.

5. Entraînement selon au moins l'une des revendications précédentes,
**caractérisé en ce**
**que** la carte de circuit imprimé (32) ne présente aucun trou métallisé traversant toute 1a carte de circuit imprimé (32), en particulier la carte de circuit imprimé (32) présentant donc seulement des vias borgnes (91) en tant que trous métallisés,
et/ou que la direction normale à la carte de circuit imprimé (32) est orientée dans la direction axiale de l'arbre,
et/ou que la carte de circuit imprimé (32) est réalisée sous forme monocouche ou multicouche, les couches étant prévues dans un matériau de base électriquement isolant.

6. Entraînement selon au moins l'une des revendications précédentes,
**caractérisé en ce**
**que** la carte de circuit imprimé (32) présente des zones métalliques (90) du côté tourné vers la mesure matérialisée (31), les zones (90) formant en particulier un réseau régulier.

7. Entraînement selon au moins l'une des revendications précédentes,
**caractérisé en ce**
**qu'**un moyen d'isolement (33), servant en particulier à l'isolement électrique, est relié de manière solidaire en rotation à la mesure matérialisée (31), le moyen d'isolement (33) étant en particulier relié à la mesure matérialisée (31) par coopération de matières, de forces et/ou de formes,
le moyen d'isolement (33) étant en particulier réalisé en forme de capot et/ou relié à la mesure matérialisée (31) par clipsage
et/ou le moyen d'isolement (33) étant étendu axialement de telle sorte qu'il recouvre au moins partiellement axialement la zone axiale recouverte par la mesure matérialisée (31),
l'axe de l'arbre définissant en particulier la direction axiale.

8. Entraînement selon au moins l'une des revendications précédentes,
**caractérisé en ce**
**que** la distance entre la mesure matérialisée (31) et le capteur (35) est assez petite et la capacité d'isolement et/ou la rigidité diélectrique du moyen d'isolement (33) assez élevée pour qu'un claquage électrique ait lieu ou du moins soit très probable en cas d'enlèvement du moyen d'isolement électrique (33).

9. Entraînement selon au moins l'une des revendications précédentes,
**caractérisé en ce**
**qu'**un moyen d'isolement supplémentaire est disposé sur ou dans une masse de scellement (70) et/ou sur ou dans une colle, la masse de scellement (70) ou la colle étant aussi reliée à une carte de circuit imprimé (32) du capteur (35) et/ou à des composants qui équipent la carte de circuit imprimé (32) du capteur (35),
le moyen d'isolement (33) étant en particulier réalisé dans un matériau qui présente une capacité d'isolement électrique plus élevée que l'air, en particulier au moins cinq fois plus élevée,
et/ou
**qu'**un moyen d'isolement supplémentaire est réalisé sous la forme d'une plaque rigide et/ou
**qu'**un moyen d'isolement supplémentaire est réalisé sous la forme d'une feuille (60) flexible, en particulier d'une feuille (60) autocollante, et recouvre au moins partiellement la carte de circuit imprimé (32) équipée de composants de son côté tourné vers la mesure matérialisée (31),
et/ou
**qu'**un moyen d'isolement supplémentaire est réalisé sous la forme d'une feuille (60) préformée, en particulier d'une feuille (60) autocollante, et recouvre au moins partiellement la carte de circuit imprimé (32) équipée de composants de son côté tourné vers la mesure matérialisée (31),
et/ou
**qu'**un moyen d'isolement supplémentaire est disposé entre la mesure matérialisée (31) et au moins une zone partielle de la colle ou de la masse de scellement (70).

10. Entraînement selon au moins l'une des revendications précédentes,
**caractérisé en ce**
**que** la mesure matérialisée (31) est un aimant permanent, en particulier un aimant permanent magnétisé en direction radiale.

11. Entraînement selon au moins l'une des revendications précédentes,
**caractérisé en ce**
**que** le capteur (35) comprend au moins un capteur à effet Hall (35) et/ou un capteur à effet Wiegand (35), le capteur (35) comprenant en particulier aussi un circuit d'évaluation servant à générer les signaux de capteur à partir des signaux de sortie du capteur à effet Wiegand et/ou du capteur à effet Hall (35).

12. Entraînement selon au moins l'une des revendications précédentes,
**caractérisé en ce**
**qu'**un redresseur du variateur est alimenté à partir d'une tension alternative du réseau et l'électronique de traitement de signaux est reliée galvaniquement à une sortie du redresseur et/ou l'électronique de traitement de signaux est reliée galvaniquement à un potentiel d'une tension unipolaire alimentant un onduleur du variateur et/ou d'une tension continue, en particulier de la tension de circuit intermédiaire.

13. Entraînement selon au moins l'une des revendications précédentes,
**caractérisé en ce**
**que** l'électronique de traitement de signaux génère des signaux de commande modulés en largeur d'impulsion pour des commutateurs à semi-conducteurs de l'onduleur, en tenant compte des signaux de capteur et/ou en tenant compte de l'allure des signaux de capteur.
